# EUROPEAN PATENT APPLICATION

(11) **EP 2 002 958 A2**
(43) Date of publication of application: **17.12.2008**
(21) Application number: 07730359.2
(22) Date of filing: 07.03.2007
(51) Int. Cl.: B29C 45/04, B29C 45/32, B29C 45/10

(54) **IMPROVEMENTS IN INJECTION SYSTEMS IN INJECTION MACHINES**

(30) Priority: 04.04.2006 ES 200600866
(71) Applicant: Matrix, S.A., 17500 Ripoli (ES)
(72) Inventor: MILLÁN GONZÁLEZ, Juan, 17500 Ripoll (ES)
(74) Representative: Morgades y Manonelles, Juan Antonio
(86) International application number: PCT/ES2007/000118
(87) International publication number: WO 2007/113349

(57) **Abstract**

The invention refers to some improvements applied to the so called injection machines of plastic materials, the converts them into multi-injection machines, that is to say, that have several injection screws, as many as different components we intend to manufacture. The goal of these improvements is to develop a production process based on a technology that contains both the injection and the assembling of different parts, opposed to the traditional process that consists on manufacturing parts with plastic components requiring different production processes. These parts are composed by several plastic components that have to be later assembled in automatic assembling machines specifically designed for each product.

## Description

The invention refers to some improvements applied to the so called injection machines for plastic materials, in order to convert them in multi-injection machines. That is machines that have as many injection screws as parts we need to produce.

The purpose of this improved system is to develop a manufacturing process based on a technology covering both injection and assembling of parts. It is well known that the traditional way of producing plastic parts requires different production processes. Each complex part is composed of simple injected plastic components that have to be assembled on product specific designed automatic assembling machines. This traditional and well known system requires an injection mould and an injection material for each plastic component.

One of the existing manufacturing methods of thermoplastic parts is the injection moulding. This method uses an injection piston, usually called injection screw, that moves quickly forward and backwards to push the heat softened plastic through the space between the walls of the injection barrel and a centrally located heated piece or screw. Because of the low thermal conductivity of the plastic materials, this central piece is used so that the heating surface in the cylinder is big and the heated plastic thickness is small.

Under the complementary action of both heat and pressure applied by the injection screw, the polymeric material is fluent enough to fill the chilled mould in which it takes the form of the requested part. After spending a brief period of time in the closed mould, the plastic part freezes, the mould opens and the part is ejected. The complete manufacturing time is rather quick, just a few seconds.

The proposed improvements allow the injection of 2 or more components, equals or different, separately; and with a mechanical process integrated in the mould, assemble them or weld them by a third injection, in mould and during the injection cycle. So it is achieved that each time the mould opens a finished part is ejected.

This system requires a multi-injection machine, that is to say, a machine equipped with several injection units, as many as components are intended to be injected. The plastic material of each component can be different, so that each component can be used separately or to weld together other previously injected.

In this system description we will use the names of the mould parts related to the injection machine parts. It is well known that the side of the machine where lays the injection screw is called fixed side or injection side. The machine's plate on which we fix the mould on this side of the machine does not move at all. The moving side or ejection side is the opposite side of the machine and the machine's plate on which the mould is fixed has a linear movement that allows the mould to open at the parting line and to eject the injected parts by mechanical elements.

The system described here consists of two rotating plates; one located on the fix half of the mould and the other located on the moving half of the mould. Those two turning plates are rotated by any rotating existing device, as for example, a system of rack and pinions driven by hydraulic or pneumatic cylinders each time the mould opens and closes.

The first turning plate of the device is located at the fixed half of the mould and placed out of the symmetrical centre of the mould. The rotating axis can be located on the top, bottom or lateral part of the tool, depending on the component to be injected.

The mould has the necessary devices to perform the injection of the first component, that we will call "A". This component will stay fixed at this turning plate when the mould opens, just opposite to the traditional process, in which component "A" would stay fixed at the moving or ejection half of the mould.

Once the mould opens, this turning plate is driven forward on a linear movement in order to separate it from the rest of the mould plates and to be able to freely turn, without any possible element interfering. Once separated, the turning plate will turn 180 °C in order to place component "A" in the appropriate position to assemble or weld it with the second component, that we will call component "B".

The second turning plate of the device is located at the moving half of the mould and placed out of the symmetrical centre of the mould. The rotating axis can be located on the top, bottom or lateral part of the tool, depending on the component to be injected.

The mould has the necessary devices to perform the injection of the first component, that we will call "B". After the opening of the mould, the second turning plate performs the same operations as the first one, but on the opposite side of the mould. Once turned 180° it places component "B" in the same position as component "A" and it is located so, that at the closing of the mould both components will either assemble or be placed one on the other so to weld them by a third plastic. When that mould is closed, both turning plates have a common area in which are in contact and where both components "A" and "B" overlap. Each turning plate has double as much components as it is intended to assemble or weld.

These turning plates may have different geometries, as round, rectangular, shaped as a double "L", cross shaped ...etc depending on the mould design.

The injection of the three materials (or two materials, in case there is only an assembling of components "A" and "B") is done with the mould closed. Once the mould opens it takes place the ejection of the assembled or the part welded with a third material.

After this, both turning plates advance as described previously, either simultaneously or one after the other. Once finished the linear movement, both turning plates are rotated in order to place both injected components in the same position or mould axis. Next operation is to retract both turning plates to the start position.

When closing again the mould, the overlap of components "A" and "B" takes place. At this point there can happen several operations: either both parts stay in a position to weld them by a third material injection, or they are automatically assembled by subjection elements of the components themselves, or they are assembled under pressure using a moving mechanical device of the mould. After this point, the working cycle starts again.

Another of the invention's goal is to apply it at the "Stack Mould" concept. This kind of mould consists of three different parts:
- A fixed part
- A moving part
- An intermediate part.

The fixed half is the part of the mould that is subjected to the machine's fixed plate, the moving part is the part of the mould subjected to the machine's moving plate, and the intermediate part is the part that stays between them and is supported by both sides of the mould and the machine's structure.

This kind of mould's concept is based on having the components injected on two parting faces in order to take advantage of the machine's closing force allowing to produce double as much parts with the same machine.

By applying the improvements to this kind of moulds, the assembling or welding process of components "A" and "B" can be implemented in one of the parting faces and inject another component in the second parting face of the "Stack Mould".

This application requires a fourth injection screw, so that the injection machine has to have altogether 4 injection units.

Other details and characteristics will be outlined in the description to follow, that refers to the sketches attached to this memoir showing the preferred details of the invention. Those details are exposed for reference, but they are not limiting the invention.

It follows a detailed relation of the main elements of the invention that appear on the attached drawings :
(10) Mould.
(11) Turning plate for component "A".
(12) Turning plate for component "B".
(13) Plate "C".
(14) Bars.
(15) Racks.
(16) Pinion systems.
(17) Plate.
(18) Hot runner.
(19) Support.
(20) Axis.
(21) Axis.
(22) Box.
(23) Fixed half.
(24) Moving half.
(25, 26 & 27) Injection units.
(28) Injection unit.
(29) Fixed block.
(30) Moving block.
(31) Mould.
(32) Intermediate block.
(33) Fixed plate.

Picture n° 1 is an perspective of two turning plates, (11) on the fixed half (23), and (12) on the moving half (24) of the mould (10).

Picture n° 2 is a perspective on which it can be seen the plate (12) that turns around the axis (20), with component "B" fixed to plate (12) at the moment of rotation against the moving half (24), opposite to the plate (11) fixed at the fixed half (23) of the mould (10).

Picture n° 3 is a perspective of the fixed half (23)opposing the moving half (24), with plates (11) & (12) opposed, but excentrically placed, so that when the advance one on the other they place component "A" on component "B".

Picture n° 4 is a perspective of a mould (31) using a "Stack Mould" design containing injection units (25, 26 & 27) placed at the moving block (29) and the injection unit (28) located on the moving block (30).

At the actual state of the art, the injection moulding process is a technique to mould plastic materials, in which a previously fluidised material is injected in a mould composed of two halves.

A basic realisation of this state of the art is the opposition on an injection machine of a fixed mould half subjected to the fixed plate against a moving mould half subjected to the moving plate. The moving plate is pushed forwards and backwards by a cylinder whose piston actuates on the moving mould half and its ejection bar. This classical configuration has been modified and is therefore the subject of the current invention. As shown on picture n° 3, the fixed side (23) of an injection machine not shown on the picture, incorporates a plate (11) that turns around an axe (21) assembled preferably on a perpendicular position to the fixed side (23). Opposed to the plate (11) there is a second turning plate (12) articulated with the moving side (24) of the injection machine.

The first turning plate (11) is located at the fixed half (23), but out of the symmetric centre of the mould, and the rotation axis (21), can be placed on the top, the bottom or the lateral (23), depending on the part that has to be injected, for example on plate (11) a component is injected that we will call component "A" forming a first part, and contrary to the state of the art process, the part that will be called "A", it stays on the plate (11) when the mould opens, that is, when plate (11) and plate (12) separate.

After injection of component "A", the plate (11) makes a linear movement forwards to detach from the fixed part (23) and be able to turn freely without any element interfering, performing afterwards (11) a 180° turn, around its axis (21), to place component "A" on the appropriate position to assemble it or to weld it to the second component that we will call "B".

The second turning plate (12) is located on the moving half (24) of the mould (10) and is out of the symmetric centre of the tool too, similar to (11), the plate (12) can be placed on the top, the bottom or the lateral of the moving half (24) see picture n° 2. On this plate (12) it is performed the injection of the component we have called "B". After the opening of the mould the same movements described for plate (11) are performed, but on the opposite side. By turning plate "B" 180° component "B" is placed on the same position where component "A" has been placed, so that when the mould closes, parts "A" and "B" can be assembled, as they lay one on the other, or be welded by a third injection. All this is due to the fact that when the tool closes both plates (11-12) have a common area of contact on which parts "A" and "B" are placed overlapped.

When the mould opens the assembled or welded part is ejected. This can be seen more in detail on picture nº 4 on which is shown an application of the improvements on a "Stack Mould" (31).

The mould (31) consists of four injection units, for example units (25, 26, 27, and 28), see picture nº 4, assembled on blocks (29, 30, & 32), attached (29, 30 & 32) on the top and bottom parts by rack bars (15), that articulate with other bars (15) and move longitudinally with help of boxes (22).

In those boxes (22) enter the rack bars (15), and in the interior they match some pinions (15) and movement redactor, actuating those pinions by any mean, for example an electromotor, not shown on the picture.

Mould (31), as shown in picture nº 4, consists of a intermediate block (32) located in an intermediate position, and supported by (29-30) as well as by the injection machine's structure, not shown in the picture, and right and left of it the moving mould (31) and the fixed mould (29).

Being sufficiently described the current improvements in correspondence with the pictures attached, is easy to understand that it will be easy to introduce any modification of the detail required as long as it does not change the essence of the invention, which can be summarized in the following claims.

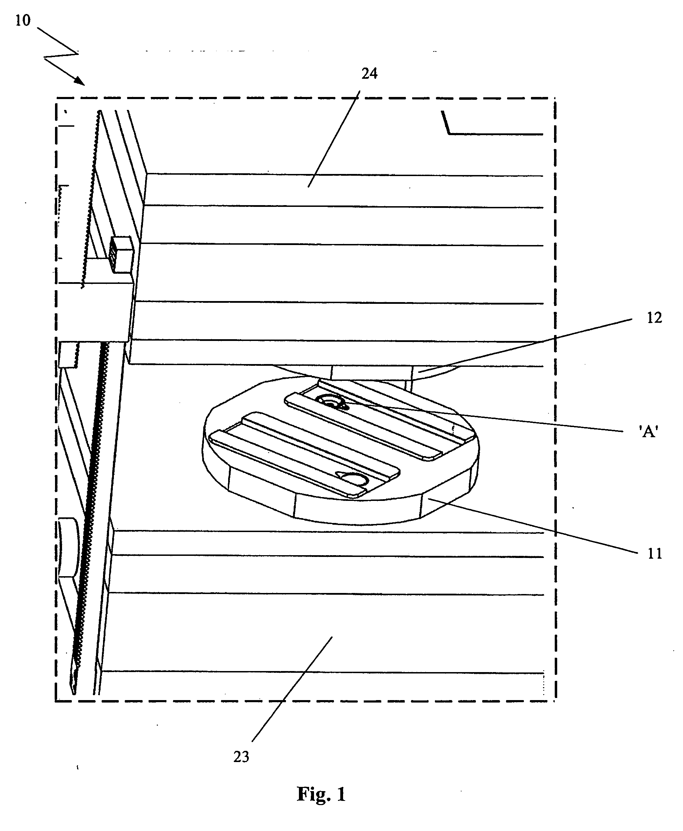

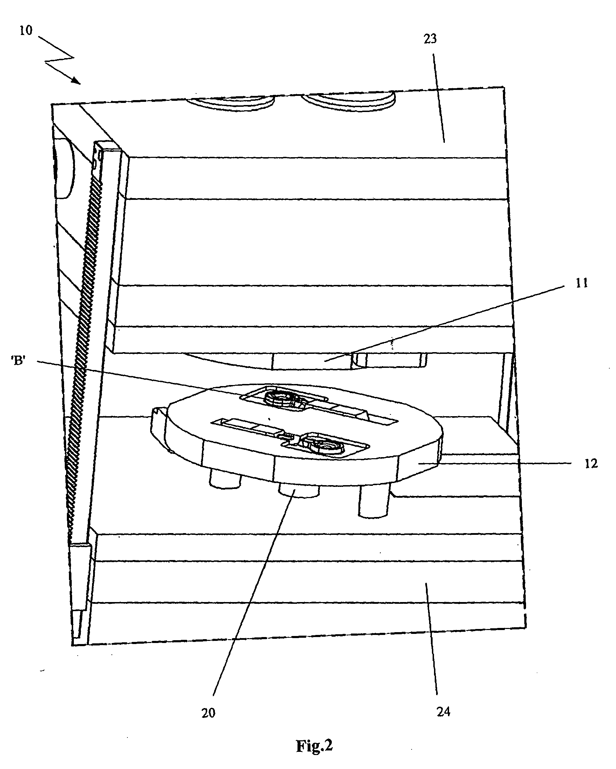

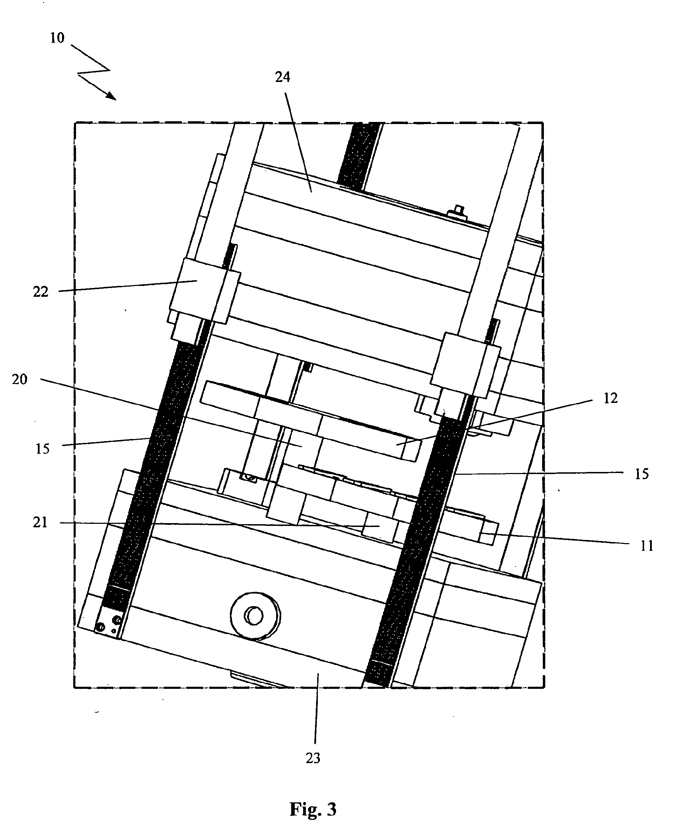

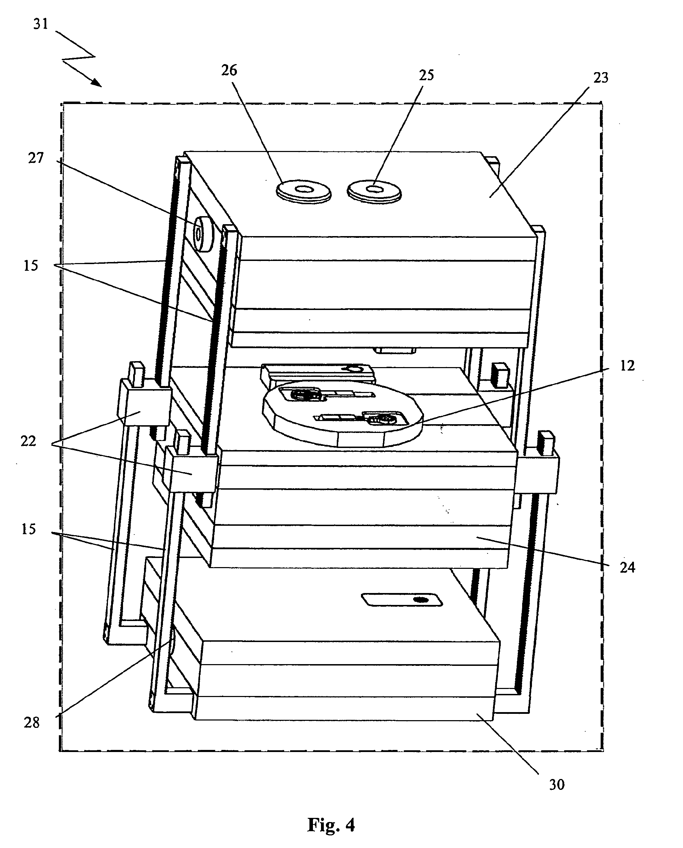

## Claims

1. ª -"IMPROVEMENTS ON THE INJECTION SYSTEMS FOR INJECTION MACHINES" that incorporate a fixed mould half attached to the fixed plate, with a moving mould half attached to a moving plate. The moving plate is pushed forwards and backwards by a cylinder, whose piston actuates on the moving mould half and an ejection bar to eject the injected part of the mould, being their characteristic that in their interior are injected more than one component and assembled.

2. ª -"IMPROVEMENTS ON THE INJECTION SYSTEMS FOR INJECTION MACHINES" as per first claim **characterized by** the fact that the injection material is of the same kind.

3. ª -"IMPROVEMENTS ON THE INJECTION SYSTEMS FOR INJECTION MACHINES" as per first claim **characterized by** the fact that the injection material is of different kind.

4. ª -"IMPROVEMENTS ON THE INJECTION SYSTEMS FOR INJECTION MACHINES" **characterized by** the fact that in its interior performs the injection of two parts and their welding by a posterior injection.

5. ª -"IMPROVEMENTS ON THE INJECTION SYSTEMS FOR INJECTION MACHINES" as per fourth claim **characterized by** the fact that the injection material is of the same kind.

6. ª -" IMPROVEMENTS ON THE INJECTION SYSTEMS FOR INJECTION MACHINES" as per fourth claim **characterized by** the fact that the injection material is of different kind.

7. ª -" IMPROVEMENTS ON THE INJECTION SYSTEMS FOR INJECTION MACHINES" as per first claim **characterized by** the fact that the injection machine incorporates several injection screws.

8. ª -"IMPROVEMENTS ON THE INJECTION SYSTEMS FOR INJECTION MACHINES" as per first claim **characterized by** the fact that the injection machine incorporates two or more turning plates, one located on the fixed half of the mould and the other on the moving half of the mould.

9. ª -"IMPROVEMENTS ON THE INJECTION SYSTEMS FOR INJECTION MACHINES" as per first claim **characterized by** the fact that the first turning plate of the injection machine is located on the fixed half of the mould and it is out of the symmetrical centre of the mould.

10. ª-"IMPROVEMENTS ON THE INJECTION SYSTEMS FOR INJECTION MACHINES" as per first claim **characterized by** the fact that the first component stay on the turning plate after injection once the mould is opened.

11. ª-"IMPROVEMENTS ON THE INJECTION SYSTEMS FOR INJECTION MACHINES" as per first claim **characterized by** the fact that the first turning plate after injection and mould opening follows a linear movement forwards in order to detach from all other mould plates and freely turns 180º in order to place the first components in a assembling or welding position with the second part.

12. ª-"IMPROVEMENTS ON THE INJECTION SYSTEMS FOR INJECTION MACHINES" as per first claim **characterized by** the fact that the second turning plate of the injection machine is located on the moving half of the mould and it is out of the symmetrical centre of the mould, containing all necessary elements to inject the second component.

13. ª-" IMPROVEMENTS ON THE INJECTION SYSTEMS FOR INJECTION MACHINES" as per first claim **characterized by** the fact that the second turning plate after injection and mould opening performs the same movements as described for the first plate.

14. ª-"IMPROVEMENTS ON THE INJECTION SYSTEMS FOR INJECTION MACHINES" as per first claim **characterized by** the fact that the second turning plate turns 180º placing itself in front of the first plate. When closing the mould again both parts previously injected can be welded by a third injection.

15. ª-"IMPROVEMENTS ON THE INJECTION SYSTEMS FOR INJECTION MACHINES" as per first claim **characterized by** the fact that each part is equal.

16. ª-"IMPROVEMENTS ON THE INJECTION SYSTEMS FOR INJECTION MACHINES" as per first claim **characterized by** the fact that each part is different.
